# EUROPÄISCHE PATENTSCHRIFT

(11) **EP 1 119 242 B1**
(45) Veröffentlichungstag und Bekanntmachung des Hinweises auf die Patenterteilung: **08.01.2003**
(21) Anmeldenummer: 99948877.8
(22) Anmeldetag: 27.09.1999
(51) Int. Cl.: A01K 95/00

(54) **GEWICHTSKÖRPERSYSTEM**
WEIGHT SYSTEM
SYSTEME DE PESEE

(30) Priorität: 07.10.1998 DE 29817903 U
(43) Veröffentlichungstag der Anmeldung: 01.08.2001
(73) Patentinhaber: Michallek, Bernd, 41236 Mönchengladbach (DE)
(72) Erfinder: OVERSBERG, Hans, Hermann, D-41236 Mönchengladbach (DE)
(74) Vertreter: Stenger, Watzke & Ring Patentanwälte
(86) Internationale Anmeldenummer: EP9907165
(87) Internationale Veröffentlichungsnummer: WO00019815

(56) Entgegenhaltungen:
- WO-A-96/02133
- WO-A-96/28020
- GB-A- 2 078 472
- GB-A- 2 284 336
- US-A- 2 517 375

## Beschreibung

Gewichtskörpersystem, insbesondere für Fischereizwecke, wobei ein Gewichtskörper mit einem für einen Einsatz vorgesehen Gesamtgewicht aus einer Vielzahl von fest miteinander verbundenen, an zumindest einer Oberfläche einen Verbindungsbereich aufweisenden Einzelkörpern zusammengesetzt ist und wobei der aus den Einzelkörpem gebildete Gewichtskörper eine geometrisch geschlossene Form aufweist.

Gewichtskörpersysteme, insbesondere für Fischereizwecke, sind an sich bekannt. Insbesondere im Sportfischereibereich werden die Gewichtskörper benötigt, um das Angelgerät mit dem erforderlichen Gewicht zu versehen, um einen Haken in der gewünschten Tiefe zu positionieren, am Grund anzuordnen, Schwimmer zu beschweren und dergleichen. Solche Gewichtskörper sind an sich bekannt. Besonders kleine Gewichtskörper sind beispielsweise Quetschbleikugeln, die einen Schlitz aufweisen, in welchem eine Angelsehne eingelegt wird. Durch Quetschen wird die Kugel an der Angelsehne fixiert. Eine Vielzahl von Kugeln können an einer Angelsehne angequetscht werden, um ein gewünschtes Gesamtgewicht zu erhalten. Weiterhin sind größere Gewichtskörper unterschiedlicher Formen bekannt, seien es Kugeln, Bimenformen, Tonnenformen oder auch Körper mit ebenen Oberflächen.

In jüngster Zeit sind auch Gewichtskörper aus anderen Materialien als aus Blei bekannt, welche aber hinsichtlich des Gewichtskörpersystems zu den oben beschriebenen Systemen identisch sind, mit Ausnahme der Tatsache, daß anstelle von Blei andere Materialien verwendet werden.

Ein Nachteil herkömmlicher Gewichtskörpersysteme besteht darin, daß von den Nutzern immer eine Vielzahl völlig unterschiedlicher Einzelgewichtskörper bevorratet werden müssen, um das Angelgerät auf den jeweils gewünschten Einsatzfall anpassen zu können.

In der GB 2 284 336 A wird ein Gewichtskörpersystem für Fischereigewichte beschrieben, bei dem ein Gewichtskörper aus verschiedenen Einzelkörpern modulartig zusammensetzbar ist. Das Gewichtskörpersystem wird aus einer Anzahl von zu einem Gewichtskörper zusammensetzbaren Einzelkörpem gebildet, die über ein stangenartiges Element miteinander verbunden werden. In einem ersten Ausführungsbeispiel weist das stangenförmige Element in regelmäßigen Abständen Haltevorsprünge auf, an denen Verriegelungselemente des Gewichtskörpers festlegbar sind. Die Verriegelungselemente werden mit zu den Haltevorsprüngen korrespondierenden Ausnehmungen über die Haltevorsprünge geführt und durch Verdrehen festgelegt. Eine Feder sorgt dabei für eine Andruckkraft gegen die Halteelemente des stangenförmigen Elementes, welche ein unbeabsichtigtes Lösen der Verriegelungselemente verhindern soll.

In einem zweiten Ausführungsbeispiel dieser Druckschrift ist das stangenförmige Element mit einer Raststruktur ausgebildet, an der eine Rastzunge einer Abschlußkappe des Gewichtskörpersystems angreift. Der Gewichtskörper wird durch Einsetzen der gewünschten Anzahl von Zwischenelementen aufgebaut und die Abschlußkappe des Gewichtskörpersystems wird auf das stangenartige Element aufgesetzt und mit der Rastzunge an der Rastanordnung der Stange festgelegt.

In einem dritten Ausführungsbeispiel dieser Druckschrift ist schließlich das Stangenelement mit einem Außengewinde versehen, an welche korrespondierende Innengewinde der Einzelkörper angreifen, die zum Festlegen der Einzelkörper auf das Gewinde des Stangenelementes aufgeschraubt werden.

Ein weiteres aus Einzelkörpem zusammensetzbares Gewichtskörpersystem ist in der GB 2 078 472 A gezeigt. Die Einzelkörper weisen eine zentrale Öffnung auf, durch welche ein Verbindungselement hindurchgeführt werden kann. Das Verbindungselement ist ein aus Draht geformtes, zweischenkliges Element, wobei die Enden der Schenkel jeweils nach außen umgebogen sind. Die umgebogenen Enden greifen dabei in in den Einzelkörpern vorhandene Hinterschnitte ein, und werden so an den untersten der zu verbindenden Einzelkörper festgelegt.

Die US 2,517,375 offenbart schließlich ein Gewichtskörpersystem, bei dem ein Gewichtskörper aus einer Vielzahl von Einzelkörpern zusammensetzbar ist. Ein Basiskörper ist dabei mit einer stabartigen Verlängerung ausgebildet, über die weitere Einzelkörper mit korrespondierenden Öffnungen geführt werden können. Die Einzelkörper weisen in ihren Öffnungen jeweils einen Haltevorsprung auf, welcher in einer in der stabartigen Verlängerung ausgebildeten Längsnut geführt wird. Die in der stabartigen Verlängerung ausgebildeten Längsnut ist dabei an einer Stelle über einen in Umfangsrichtung des Stabes verlaufende Verbindungsnut radial versetzt ausgebildet Dies dient zum Festlegen der auf die stabartige Verlängerung aufgesetzten Einzelkörper.

Ausgehend von diesem Stand der Technik liegt der vorliegenden Erfindung die **Aufgabe** zugrunde, ein Gewichtskörpersystem, insbesondere für Fischereizwecke, anzugeben, welches die Verwendung alternativer Materialien für die Herstellung begünstigt und hinsichtlich der Anpassung an unterschiedliche Einsatzzwecke höchst komfortabel ist.

Zur technischen **Lösung** dieser Aufgabe wird zunächst ein Gewichtskörpersystem, insbesondere für Fischereizwecke, der eingangs genannten Art vorgeschlagen, wobei der Verbindungsbereich als Nut-/Federsystem ausgebildet ist.

Eine weitere **Lösung** dieser Aufgabe besteht erfindungsgemäß in einem Gewichtskörpersystem der eingangs genannten Art, bei dem der Verbindungsbereich als Bajonettverbindungsbereich ausgebildet ist.

Der Verbindungsbereich ist somit gemäß der ersten beiden Lösungen als ein Nut-/Federsystem oder ein Bajonettsystem ausgebildet. Diese Bereiche ermöglichen eine direkte formschlüssige Verbindung der Einzelkörper.

Eine weitere **Lösung** der der Erfindung zugrundeliegenden Aufgabe besteht in einem Gewichtskörpersystem der eingangs genannten Art, bei dem die Einzelkörper quer zum Verbindungsbereich verlaufende, die Körper vollständig querende, für zusammengesetzte Einzelkörper fluchtende Ausnehmungen aufweisen und bei dem zur Verbindung der Einzelkörper ein stiftartiges Fixierelement mit einem geringfügig größeren Außendurchmesser als der Innendurchmesser der Ausnehmungen die Ausnehmungen durchragt, wobei die Einzelkörper durch eine reibungsschlüssige Verbindung zwischen dem Fixierelement und dem Rand der Ausnehmungen in ihrer Position fixiert sind.

Bei dieser alternativen Lösung der eingangs genannten Aufgabe wird aufgrund der Abmessungen des stiftförmigen Fixierelementes sowie der in den Einzelkörpem vorgesehenen Ausnehmungen durch einfaches Aufeinanderschieben der Komponenten eine reibungsschlüssige Verbindung erzeugt.

Das erfindungsgemäße Gewichtskörpersystem ist somit ein modulares Gewichtskörpersystem, wobei ein Gewichtskörper mit dem erforderlichen Gewicht aus einer Mehrzahl von Einzelkörpern zusammengesetzt wird. Dabei werden wenigstens zwei Einzelkörper verwendet.

Dabei kann das modulare System eine Vielzahl unterschiedlicher Einzelkörper mit festgelegten Einzelgewichten umfassen. So können beispielsweise Einzelkörper für den Endbereich eines zu bildenden Gewichtskörpers vorgesehen sein, mit einer geometrisch geschlossenen Form und einen Verbindungsbereich an einer Oberfläche. Weiterhin können Zwischenkörper vorgesehen sein, die an zwei gegenüberliegenden Oberflächen mit Verbindungsbereichen versehen sind. Im Bereich der übrigen Oberflächen ist der Zwischenkörper vorzugsweise so gebildet, daß er einen Endkörper geometrisch zu einer geschlossenen geometrischen Form ergänzt. Die Zwischenkörper sind im wesentlichen zylindrisch oder scheibenförmig, so daß zwei Endkörper mit einer Vielzahl von Zwischenkörpem zu einem großen Gesamtgewicht verbindbar sind. Dabei können die Endkörper identisch sein oder auch unterschiedliche Formen aufweisen.

Die Einzelkörper für den Endbereich können beispielsweise mit Funktionselementen wie Ösen und dgl. zum Durchführen von Angelsehnen usw. versehen sein. Auch können die Einzelelemente durchbohrt sein, um den zusammengesetzten Gesamtkörper auf eine Sehne zu ziehen.

Die Einzelkörper können ganz oder teilweise aus Blei gefertigt sein. Auch können die Einzelkörper alternativ aus einem Gemisch aus wenigstens einem verkleinerten Rohstoff und einem Bindemittel hergestellt sein. Dabei eignen sich beispielsweise metallische Rohrstoffe, insbesondere Eisen, aber auch Metallgemische zur Bestimmung des gewünschten Gewichtes. Als Bindemittel haben sich Kunststoffe als sehr gut einsetzbar erwiesen, beispielsweise biologisch abbaubare Kunststoffe, zum Beispiel Polyesteramide oder dergleichen. Es lassen sich so Dichten zwischen 5 bis 10 gr./cm3 erreichen.

Gemäß einem besonders vorteilhaften Vorschlag der Erfindung enthält das Gemisch Zirkonsand.

Das erfindungsgemäße Gewichtskörpersystem unterstützt insbesondere auch die Herstellung von Gewichtskörpern aus Rohstoff-/Bindemittelgemischen, da nur eine geringe Anzahl von Einzelkörpern im Massenverfahren, beispielsweise Pressen, Spritzguß, Schießen oder dgl., hergestellt werden müssen, die dann modular zu Gesamtkörpern zusammensetzbar sind. Die Benutzer, also beispielsweise Sportangler, kaufen nunmehr eine Anzahl von End- und Zwischenkörperelementen und setzen sich jeweils für den gewünschten Einzelfall den erforderlichen Gewichtskörper daraus zusammen.

Weitere Vorteile und Merkmale der Erfindung ergeben sich aus der folgenden Beschreibung anhand der Figuren. Dabei zeigen:
- Fig. 1: eine schematische, geschnittene Ansicht eines Ausführungsbeispiels für einen Gewichtskörper;
- Fig. 2: eine Draufsicht auf einen Verbindungsbereich;
- Fig. 3: eine Schnittansicht eines alternativen Ausführungsbeispiels für einen Gewichtskörper,
- Fig. 4: eine Ansicht eines alternativen Ausführungsbeispiels für einen Einzelkörper für den Endbereich;
- Fig. 5: eine schematische, geschnittene Ansicht eines weiteren Ausführungsbeispiels für einen Gewichtskörper und
- Fig. 6: eine Draufsicht auf einen Verbindungsbereich aus Fig. 5.

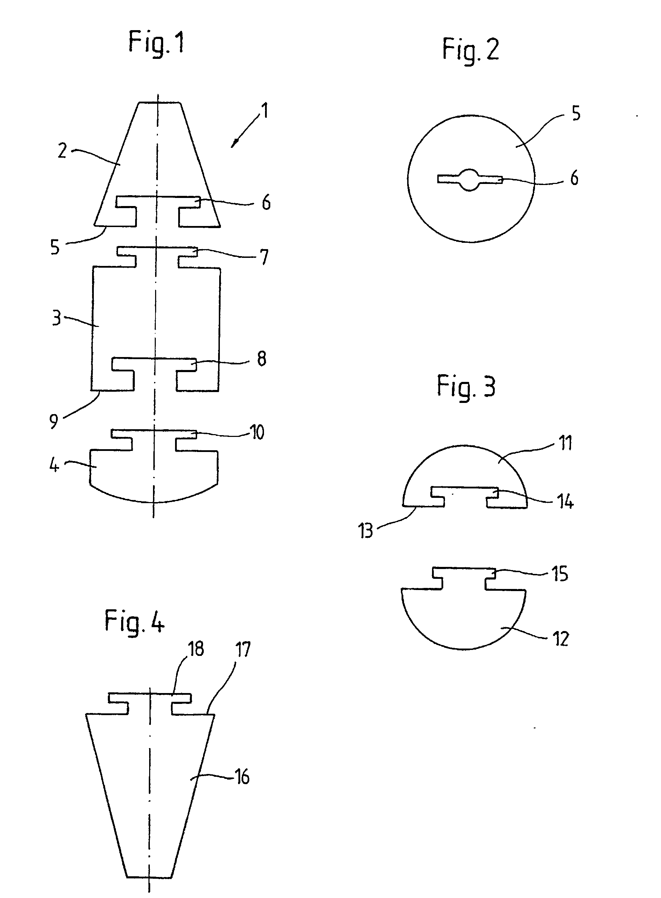

Fig. 1 zeigt einen Gewichtskörper 1, welcher zusammengesetzt wird aus einem Endkörper 2, einem Mittelkörper 3 und einem Endkörper 4. Die Einzelkörper 2, 3, 4 weisen Verbindungsbereiche auf, beispielhaft bezeichnet mit Bezugsziffern 5 und 9, welche einerseits Senken 6, 8 aufweisen, andererseits T-Stücke 7, 10, so daß eine Art Bajonettverschluß hergestellt werden kann. Fig. 2 zeigt den Verbindungsbereich 5 mit der Senke 6 in einer Draufsicht. Es zeigt sich, daß das T-Stück 7 wie ein Schlüssel ausgestaltet ist und in einen Senkenzugang eingeführt wird. Durch Verdrehen erfolgt eine Verrastung bzw. feste Verbindung.

Anstelle des Mittelkörpers 3 können auch eine Mehrzahl von Mittelkörpern angeordnet werden. Anstelle eines Endkörpers 4 kann beispielsweise auch ein wie in Fig. 4 gezeigter Endkörper 16 mit Verbindungsbereich 17 und T-Stück 18 eingesetzt werden. Die Variationen können beliebig durchgeführt werden.

Ein Ausführungsbeispiel ist auch in Fig. 3 gezeigt, wo die Einzelkörper 11 und 12 im Prinzip halbkugelförmig ausgebildet sind und im Verbindungsbereich 13 eine Senke 14, sowie am anderen Einzelkörper 12 ein T-Stück 15 aufweisen.

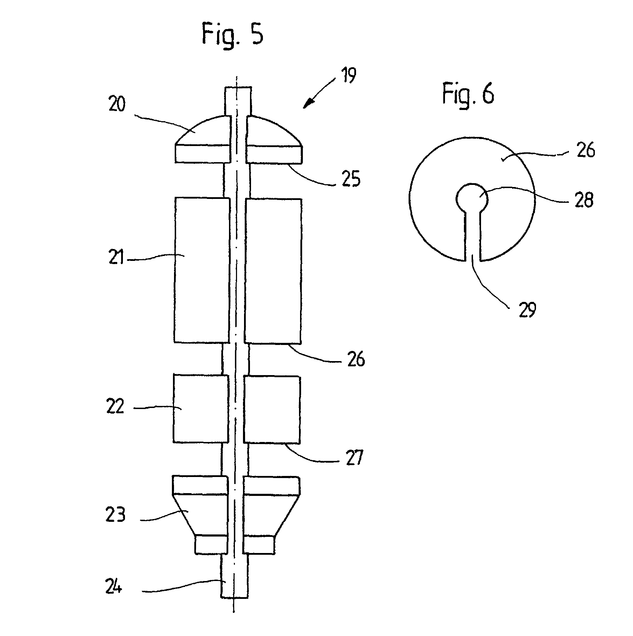

Ein weiteres Ausführungsbeispiel ist in den Fign. 5 und 6 gezeigt. Hierbei wird der Gewichtskörper 19 aus mehreren Einzelkörpern 20, 21, 22, 23 gebildet. Zwischen den Endkörpern 20, 23 sind in diesem Fall zwei Mittelkörper 21, 22 unterschiedlichen Gewichtes angeordnet. Die feste Verbindung wird mittels eines Verbindungsstiftes 24 vorgenommen, der durch in Fig. 6 dargestellte, quer zu den Einzelkörpern 20, 21, 22, 23 verlaufende Ausnehmungen 28 geführt wird und diese durchragt. Die Ausnehmungen, beispielsweise Bohrungen, sind in diesem Fall im wesentlichen mittig in Verbindungsbereichen 25, 26, 27 angeordnet und verlaufen im wesentlichen senkrecht zu diesen.

Schlitzförmige Öffnungen 29 in den Einzelkörpern, die ausgehend von den Ausnehmungen 28 eine nicht mit Verbindungsbereichen 25, 26, 27 ausgebildete Oberfläche durchtrennen, sind in Fig. 6 zu erkennen. Diese Ausnehmungen dienen zur Erzeugung einer gewissen Federelastizität der Einzelelemente, die eine reibungsschlüssige Verbindung mit dem Verbindungsstift 24 ermöglicht. Dazu ist zweckmäßigerweise der Außendurchmesser des Verbindungsstiftes 24 geringfügig größer als der Innendurchmesser der Ausnehmungen 28, so daß beim Aufschieben der Einzelkörper 20, 21, 22, 23 auf den Verbindungsstift 24 eine durch die elastische Verformung der Einzelkörper erzeugte Federkraft die reibungsschlüssige Bindung mit dem Verbindungsstift 24 zusätzlich unterstützt. Ein weiterer Vorteil der schlitzförmigen Öffnungen 29 ergibt sich daraus, daß die Einzelkörper auf einen mit der Angelsehne bereits beidseitig verbundenen Verbindungsstift 24 aufgesetzt werden können, indem die Angelsehne durch die schlitzförmige Öffnung 29 geführt wird und sodann der Einzelkörper 20, 21, 22 oder 23 auf den Verbindungsstift 24 geführt wird.

Der Verbindungsstift kann beispielsweise eine in seinem Inneren entlang der Längsachse verlaufende durchgehende Öffnung aufweisen, die es erlaubt, die Angelsehne durch diesen Stift hindurchzuführen, um den Stift so an der Angelsehne zu befestigen. Es ist aber auch denkbar, daß an den beiden Enden des Stiftes Haken, Ösen oder ähnliche Befestigungsmittel angeordnet sind. Im Falle einer durchgehenden Öffnung in seinem Inneren kann der Verbindungsstift auch mit einem von dieser Öffnung ausgehenden Verbindungsschlitz, der die in Längserstreckung liegende Oberfläche durchtrennt, ausgestattet sein, so daß auch der Verbindungsstift über diesen Schlitz über die Angelsehne geführt werden kann. Eine Verriegelung kann dann mit den auf den Stift aufgesetzten Einzelkörpem erfolgen, indem die Einzelkörper so orientiert werden, daß sie den Bereich des Öffnungsschlitzes in dem Verbindungsstift 24 überdecken.

In dem zuletzt gezeigten Ausführungsbeispiel ist es selbstverständlich auch möglich, keinen, nur einen oder mehr als zwei Mittelkörper zwischen die Endkörper 20 und 23 zu setzen.

Es ist weiterhin auch denkbar, für den Fall der beiden ersten gezeigten Ausführungsbeispiele schlitzförmige Öffnungen analog zu den im letzten Ausführungsbeispiel gezeigten schlitzförmigen Öffnungen 28 vorzusehen, die ein Anbringen der Einzelkörper oder des zusammengesetzten Gewichtskörpers auf einer Angelsehne erleichtern können, im Falle daß diese Körper eine durchgehende Ausnehmung analog zu den Ausnehmungen 28 aufweisen.

Die beschriebenen und gezeigten Ausführungsbeispiele dienen nur der Erläuterung und sind nicht beschränkend. Die Einzelkörper können aus Blei und/oder neuartigen Mischungen nach Formgebungsverfahren hergestellt werden. Im Benutzungszustand hat ein Sportfischer beispielsweise ein Sortiment aus Endkörpern und Mittelkörpern, die hinsichtlich ihres Einzelgewichtes exakt definiert sind. Durch Kombination verschiedener Mittelkörper mit entsprechenden Endkörpem lassen sich beliebige Gewichte zusammenstellen.

### Bezugszeichenliste

- 1: Gewichtskörper
- 2: Endkörper
- 3: Mittelkörper
- 4: Endkörper
- 5: Verbindungsbereich
- 6: Senke
- 7: T-Stück
- 8: Senke
- 9: Verbindungsbereich
- 10: T-Stück
- 11: Einzelkörper
- 12: Einzelkörper
- 13: Verbindungsbereich
- 14: Senke
- 15: T-Stück
- 16: Endkörper
- 17: Verbindungsbereich
- 18: T-Stück
- 19: Gewichtskörper
- 20: Endkörper
- 21: Mittelkörper
- 22: Mittelkörper
- 23: Endkörper
- 24: Verbindungsstift
- 25: Verbindungsbereich
- 26: Verbindungsbereich
- 27: Verbindungsbereich
- 28: Ausnehmung
- 29: schlitzförmige Öffnung

## Patentansprüche

1. Gewichtskörpersystem, insbesondere für Fischereizwecke, wobei ein Gewichtskörper (1) mit einem für einen Einsatz vorgesehen Gesamtgewicht aus einer Vielzahl von fest miteinander verbundenen, an zumindest einer Oberfläche einen Verbindungsbereich (5, 13, 17) aufweisenden Einzelkörpern (2, 3, 4, 11, 12, 16) zusammengesetzt ist und wobei der aus den Einzelkörpern (2, 3, 4, 11, 12, 16) gebildete Gewichtskörper (1) eine geometrisch geschlossene Form aufweist,
**dadurch gekennzeichnet,**
**daß** der Verbindungsbereich (5, 9, 13) als Nut-/Federsystem ausgebildet ist.

2. Gewichtskörpersystem, insbesondere für Fischereizwecke, wobei ein Gewichtskörper (1) mit einem für einen Einsatz vorgesehen Gesamtgewicht aus einer Vielzahl von fest miteinander verbundenen, an zumindest einer Oberfläche einen Verbindungsbereich (5, 13, 17) ausweisenden Einzelkörpem (2, 3, 4, 11, 12, 16) zusammengesetzt ist und wobei der aus den Einzelkörpern (2, 3, 4, 11, 12, 16) gebildete Gewichtskörper (1) eine geometrisch geschlossene Form aufweist, **dadurch gekennzeichnet, daß** der Verbindungsbereich (5, 9, 13) als Bajonettverbindungsbereich ausgebildet ist.

3. Gewichtskörpersystem, insbesondere für Fischereizwecke, wobei ein Gewichtskörper (19) mit einem für einen Einsatz vorgesehen Gesamtgewicht aus einer Vielzahl von fest miteinander verbundenen, an zumindest einer Oberfläche einen Verbindungsbereich (25, 26, 27) aufweisenden Einzelkörpern (20, 21, 22, 23) zusammengesetzt ist und wobei der aus den Einzelkörpem (20, 21, 22, 23) gebildete Gewichtskörper (1) eine geometrisch geschlossene Form aufweist, **dadurch gekennzeichnet, daß** die Einzelkörper (20, 21, 22, 23) quer zum Verbindungsbereich verlaufende, die Körper vollständig querende, für zusammengesetzte Einzelkörper (20, 21, 22, 23) fluchtende Ausnehmungen (28) aufweisen und daß zur Verbindung der Einzelkörper (20, 21, 22, 23) ein stiftartiges Fixierelement (24) mit einem geringfügig größeren Außendurchmesser als der Innendurchmesser der Ausnehmungen (28) die Ausnehmungen (28) durchragt, wobei die Einzelkörper (20, 21, 22, 23) durch eine reibungsschlüssige Verbindung zwischen dem Fixierelement (24) und dem Rand der Ausnehmungen (28) in ihrer Position fixiert sind.

4. Gewichtskörpersystem nach Anspruch 3, **dadurch gekennzeichnet, daß** die Einzelkörper (20, 21, 22, 23) schlitzförmige Öffnungen (29) aufweisen, die ausgehend von den Ausnehmungen (28) eine nicht mit Verbindungsbereichen (25, 26, 27) ausgebildete Oberfläche im wesentlichen entlang der Richtung, in der die Ausnehmungen (28) verlaufen, durchtrennt und dabei die mit Verbindungsbereichen (25, 26, 27) ausgebildeten Oberflächen zumindest teilweise durchschneidet.

5. Gewichtskörpersystem nach einem der vorhergehenden Ansprüche, **dadurch gekennzeichnet, daß** Einzelkörper (2, 4, 11, 12, 16, 20, 23) für einen Endbereich des Gewichtskörpers mit einer geometrisch geschlossenen Form und einem an einer Oberfläche ausgebildeten Verbindungsbereich (5, 13, 17, 25) vorgesehen sind.

6. Gewichtskörpersystem nach einem der vorhergehenden Ansprüche, **dadurch gekennzeichnet, daß** Zwischenkörper (3, 21, 22) mit an zwei gegenüberliegenden Oberflächen ausgebildeten Verbindungsbereichen (9, 26, 27) vorgesehen sind.

7. Gewichtskörpersystem nach Anspruch 6, **dadurch gekennzeichnet, daß** die nicht mit Verbindungsbereichen (5, 26, 27) ausgebildeten Oberflächen des Zwischenkörpers den Endkörper (2, 4, 11, 12, 16, 20, 23) zu einer geometrischen Form ergänzen.

8. Gewichtskörpersystem nach einem der vorhergehenden Ansprüche, **dadurch gekennzeichnet, daß** Einzelkörper (2, 3, 4, 11, 12, 16, 20, 21, 22, 23) aus Blei gebildet sind.

9. Gewichtskörpersystem nach einem der Ansprüche 1 bis 7, **dadurch gekennzeichnet, daß** Einzelkörper (2, 3, 4, 11, 12, 16, 20, 21, 22, 23) aus einem Gemisch gebildet sind, welches unter anderem verkleinerte Metalle und Kunststoffbinder umfaßt.

10. Gewichtskörpersystem nach einem vorhergehenden Ansprüche, **dadurch gekennzeichnet, daß** die Einzelkörper (2, 3, 4, 11, 12, 16, 20, 21, 22, 23) aus einer zirkonsandhaltigen Mischung gebildet sind.

## Claims

1. Weight system, in particular for fishing purposes, wherein a weight (1) of a total weight which is specified for a use is composed of a plurality of individual bodies (2, 3, 4, 11, 12, 16) which are firmly joined together and have a joining region (5, 13, 17) at least at one surface, and wherein the weight (1) formed from the individual bodies (2, 3, 4, 11, 12, 16) has a geometrically closed shape,
**characterised in that** the joining region (5, 9, 13) is formed as a groove-and-tongue system.

2. Weight system, in particular for fishing purposes, wherein a weight (I) of a total weight which is specified for a use is composed of a plurality of individual bodies (2, 3, 4, 11, 12, 16) which are firmly joined together and have a joining region (5, 13, 17) at least at one surface, and wherein the weight (1) formed from the individual bodies (2, 3, 4, 11, 12, 16) has a geometrically closed shape,
**characterised in that** the joining region (5, 9, 13) is formed as a bayonet joint region.

3. Weight system, in particular for fishing purposes, wherein a weight (19) of a total weight which is specified for a use is composed of a plurality of individual bodies (20, 21, 22, 23) which are firmly joined together and have a joining region (25, 26, 27) at least at one surface, and wherein the weight (1) formed from the individual bodies (20, 21, 22, 23) has a geometrically closed shape,
**characterised in that** the individual bodies (20, 21, 22, 23) have recesses (28) extending transversely to the joining region, completely traversing the bodies and aligned for assembled individual bodies (20, 21, 22, 23), and that a pin-like fixing element (24) of an outside diameter which is slightly greater than the inside diameter of the recesses (28) projects through the recesses (28), wherein the individual bodies are fixed in position by a frictional joint between the fixing element (24) and the edge of the recesses (28).

4. Weight system according to Claim 3, **characterised in that** the individual bodies (20, 21, 22, 23) have slot-shaped openings (29) which, starting from the recesses (28), separate a surface which is not formed with joining regions (25, 26, 27) substantially along the direction in which the recesses (28) extend and, in so doing, at least partly pass through the surfaces which are formed with joining regions (25, 26, 27).

5. Weight system according to any one of the preceding Claims, **characterised in that** individual bodies (2, 4, 11, 12, 16, 20, 23) with a geometrically closed shape and a joining region (5, 13, 17) formed at one surface are provided for an end region of the weight.

6. Weight system according to any one of the preceding Claims, **characterised in that** intermediate bodies (3, 21, 22) with joining regions (9, 26, 27) formed at two opposite surfaces are provided.

7. Weight system according to Claim 6, **characterised in that** the surfaces of the intermediate body which are not formed with joining regions (5, 26, 27) complete the end body (2, 4, 11, 12, 16, 20, 23) to form a geometric shape.

8. Weight system according to any one of the preceding Claims, **characterised in that** individual bodies (2, 3, 4, 11, 12, 16, 20, 21, 22, 23) are formed from lead.

9. Weight system according to any one of Claims 1 to 7, **characterised in that** individual bodies (2, 3, 4, 11, 12, 16, 20, 21, 22, 23) are formed from a mixture which comprises, inter alia, reduced metals and plastics binder(s).

10. Weight system according to any one of the preceding Claims, **characterised in that** the individual bodies (2, 3, 4, 11, 12, 16, 20, 21, 22, 23) are formed from a mixture which contains zircon sand.

## Revendications

1. Système de corps d'alourdissement, en particulier pour la pêche, un corps d'alourdissement (1) avec un poids total prévu pour un usage étant constitué d'une pluralité de corps individuels (2, 3, 4, 11, 12, 16) solidarisés les uns aux autres et pourvus d'une zone de liaison (5, 13, 17) sur au moins une surface, et le corps d'alourdissement (1) formé des corps individuels (2, 3, 4, 11, 12, 16) présentant une forme géométriquement fermée, **caractérisé en ce que** la zone de liaison (5, 9, 13) est conçue sous la forme d'un système à rainure et languette.

2. Système de corps d'alourdissement, en particulier pour la pêche, un corps d'alourdissement (1) avec un poids total prévu pour un usage étant constitué d'une pluralité de corps individuels (2, 3, 4, 11, 12, 16) solidarisés les uns aux autres et pourvus d'une zone de liaison (5, 13, 15) sur au moins une surface, et le corps d'alourdissement (1) formé des corps individuels (2, 3, 4, 11, 12, 16) présentant une forme géométriquement fermée, **caractérisé en ce que** la zone de liaison (5, 9, 13) est conçue sous la forme d'une zone de liaison à baïonnette.

3. Système de corps d'alourdissement, en particulier pour la pêche, un corps d'alourdissement (19) avec un poids total prévu pour un usage étant constitué d'une pluralité de corps individuels (20, 21, 22, 23) solidarisés les uns aux autres et pourvus d'une zone de liaison (25, 26, 27) sur au moins une surface, et le corps d'alourdissement (1) formé des corps individuels (20, 21, 22, 23) présentant une forme géométriquement fermée, **caractérisé en ce que** les corps individuels (20, 21, 22, 23) sont pourvus d'évidements (28) qui s'étendent perpendiculairement à la zone de liaison, qui traversent complètement les corps et qui sont alignés lorsque les corps individuels (20, 21, 22, 23) sont assemblés, et **en ce que**, pour la liaison des corps individuels (20, 21, 22, 23), un élément de fixation formant tige (24) avec un diamètre extérieur légèrement inférieur au diamètre intérieur des évidements (28) traverse les évidements (28), les corps individuels (20, 21, 22, 23) étant fixés dans leur position par une liaison par friction entre l'élément de fixation (24) et le bord des évidements (28).

4. Système de corps d'alourdissement selon la revendication 3, **caractérisé en ce que** les corps individuels (20, 21, 22, 23) sont pourvus d'ouvertures en forme de fentes (29) qui, à partir des évidements (28), divisent une surface dépourvue de zones de liaison (25, 26, 27) pour l'essentiel suivant la direction selon laquelle s'étendent les évidements (28) et traversent au moins partiellement les surfaces pourvues de zones de liaison (25, 26, 27).

5. Système de corps d'alourdissement selon une des revendications précédentes, **caractérisé en ce que** des corps individuels (2, 4, 11, 12, 16, 20, 23) pour une zone d'extrémité du corps d'alourdissement sont prévus avec une forme géométriquement fermée et avec une zone de liaison (5, 13, 17, 25) ménagée sur une surface.

6. Système de corps d'alourdissement selon une des revendications précédentes, **caractérisé en ce que** des corps intercalaires (3, 21, 22) sont prévus dans deux zones de liaison (9, 26, 27) ménagées sur deux surfaces opposées.

7. Système de corps d'alourdissement selon la revendication 6, **caractérisé en ce que** les surfaces du corps intercalaire dépourvues de zones de liaison (5, 26, 27) complètent le corps d'extrémité (2, 4, 11, 12, 16, 20, 23) pour constituer une forme géométrique.

8. Système de corps d'alourdissement selon une des revendications précédentes, **caractérisé en ce que** des corps individuels (2, 3, 4, 11, 12, 16, 20, 21, 22, 23) sont réalisés en plomb.

9. Système de corps d'alourdissement selon une des revendications 1 à 7, **caractérisé en ce que** des corps individuels (2, 3, 4, 11, 12, 16, 20, 21, 22, 23) sont réalisés en un mélange qui renferme entre autres des métaux fragmentés et un liant en matière synthétique.

10. Système de corps d'alourdissement selon une des revendications précédentes, **caractérisé en ce que** les corps individuels (2, 3, 4, 11, 12, 16, 20, 21, 22, 23) sont réalisés en un mélange contenant du sable de zircon.
